# EUROPÄISCHE PATENTANMELDUNG

(11) **EP 4 755 828 A1**
(43) Veröffentlichungstag der Anmeldung: **10.06.2026**
(21) Anmeldenummer: 25220144.7
(22) Anmeldetag: 02.12.2025
(51) Int. Cl.: B65G 47/91, B25J 11/00, B65B 23/14, B65B 35/38, B65B 35/52, B65G 57/30

(54) **VAKUUMHANDHABUNGSVORRICHTUNG FÜR EINE VERPACKUNGSMASCHINE SOWIE VERFAHREN ZU EINEM HANDHABEN VON PRODUKTEN MITTELS EINER DERARTIGEN VAKUUMHANDHABUNGSVORRICHTUNG**

(30) Priorität: 04.12.2024 DE 102024136163
(71) Anmelder: Syntegon Packaging Systems AG, 8222 Beringen (CH)
(72) Erfinder: Indlekofer, Matthias, 8222 Beringen (CH); Peter, Thomas, 8302 Kloten (CH)
(74) Vertreter: Daub, Thomas

(57) **Zusammenfassung**

Die Erfindung geht aus von einer Vakuumhandhabungsvorrichtung, insbesondere von einem Vakuum-Picker, für eine Verpackungsmaschine, mit zumindest einer Aufnahmeeinheit (14) zu einer Aufnahme von einer Vielzahl an Produkten (16), insbesondere Lebensmitteln, die zumindest einen Aufnahmeraum (18) begrenzt, in dem die Vielzahl an Produkten (16) geordnet, insbesondere in Form eines Stapels oder einer Reihe, anordenbar sind, und die zumindest ein beweglich gelagertes Anlageelement (20) umfasst, an dem zumindest ein, insbesondere ein zuerst in den Aufnahmeraum (18) gefördertes, Produkt (16) der Vielzahl an Produkten (16) in einem im Aufnahmeraum (18) angeordneten Zustand des zumindest einen Produkts (16) anlegbar ist, insbesondere anliegt.

Es wird vorgeschlagen, dass die Vakuumhandhabungsvorrichtung zumindest eine Aktivantriebseinheit (22) zu einer aktiven, insbesondere frei von einer rein durch eine Gewichts- und/oder Federkraft hervorrufbaren Bewegung des Anlageelements (20) ausgebildeten, Bewegung des Anlageelements (20) umfasst.

## Beschreibung

### Stand der Technik

Die Erfindung betrifft eine Vakuumhandhabungsvorrichtung für eine Verpackungsmaschine, mit zumindest einer Aufnahmeeinheit zu einer Aufnahme von einer Vielzahl an Produkten, die zumindest einen Aufnahmeraum begrenzt, in dem die Vielzahl an Produkten geordnet, insbesondere in Form eines Stapels oder einer Reihe, anordenbar sind, und die zumindest ein beweglich gelagertes Anlageelement umfasst, an dem zumindest ein Produkt der Vielzahl an Produkten in einem im Aufnahmeraum angeordneten Zustand des zumindest einen Produkts anlegbar ist, insbesondere anliegt.

Aus EP 4 230 538 A1 und EP 1 761 446 A1 sind bereits (Vakuum-)Handha-bungsvorrichtungen bekannt, bei denen ein Anlageelement mittels Führungsstangen beweglich gelagert ist und/oder mittels einer auf einer Gewichts- und/oder Federkraft basierenden Antriebskraft bewegbar ist. Dies kann dazu führen, dass das Anlageelement beispielsweise nicht zuverlässig an das Produkt anlegbar ist und es zu einer Beschädigung von Produkten und/oder zu einem Verkanten von Produkten im Aufnahmeraum infolge eines Hineinförderns, insbesondere Einsaugens, von Produkten in den Aufnahmeraum kommen kann. Zudem kann es bei einer Ausrichtungsänderung der bekannten (Vakuum-)Handhabungsvorrichtun-gen dazu kommen, dass nicht gewährleistet werden kann, dass eine von dem Anlageelement auf das/die im Aufnahmeraum befindlichen Produkt/e ausgeübte Kraft groß genug ist, um das/die Produkt/e sicher im Aufnahmeraum zu halten.

Dies kann zu ungewollten Maschinenstopps und somit zu ungewollten Produktionsstopps führen.

Die Aufgabe der Erfindung besteht insbesondere darin, eine gattungsgemäße Vakuumhandhabungsvorrichtung, ein gattungsgemäßes Verfahren und eine gattungsgemäße Verpackungsmaschine mit verbesserten Eigenschaften hinsichtlich einer sicheren und produktschonenden Handhabung bei einer hohen Flexibilität im Hinblick auf ein Einsatzgebiet bereitzustellen. Die Aufgabe wird erfindungsgemäß durch die Merkmale des Anspruchs 1, 6 bzw. 10 gelöst, während vorteilhafte Ausgestaltungen und Weiterbildungen der Erfindung den Unteransprüchen entnommen werden können.

### Offenbarung der Erfindung

Die Erfindung geht aus von einer Vakuumhandhabungsvorrichtung, insbesondere von einem Vakuum-Picker, für eine Verpackungsmaschine, mit zumindest einer Aufnahmeeinheit zu einer Aufnahme von einer Vielzahl an Produkten, insbesondere Lebensmitteln, die zumindest einen Aufnahmeraum begrenzt, in dem die Vielzahl an Produkten geordnet, insbesondere in Form eines Stapels oder einer Reihe, anordenbar sind, und die zumindest ein beweglich gelagertes Anlageelement umfasst, an dem zumindest ein, insbesondere ein zuerst in den Aufnahmeraum gefördertes, Produkt der Vielzahl an Produkten in einem im Aufnahmeraum angeordneten Zustand des zumindest einen Produkts anlegbar ist, insbesondere anliegt.

Es wird vorgeschlagen, dass die Vakuumhandhabungsvorrichtung zumindest eine Aktivantriebseinheit zu einer aktiven, insbesondere frei von einer rein durch eine Gewichts- und/oder Federkraft hervorrufbaren Bewegung des Anlageelements ausgebildeten, Bewegung des Anlageelements umfasst. Durch die erfindungsgemäße Ausgestaltung der Vakuumhandhabungsvorrichtung kann vorteilhaft eine zuverlässige und steuer- oder regelbare Bewegung des Anlageelements in eine gewünschte Position des Anlageelements relativ zum Aufnahmeraum ermöglicht werden. Es kann vorteilhaft eine produktschonende Handhabung realisiert werden, da insbesondere eine Aufprallenergie eines Produkts an dem Anlageelement bei einem Einsaugen des Produkts in den Aufnahmeraum gering gehalten werden kann. Das Anlageelement kann vorteilhaft aktiv an eine Abmessung, insbesondere an eine Stärke/Dicke, des Produkts angepasst werden, insbesondere durch eine entsprechende aktive Bewegung des Anlageelements relativ zum Aufnahmeraum in Abhängigkeit von der Stärke/Dicke des Produkts. Es kann vorteilhaft eine hohe Flexibilität in Bezug auf ein Einsatzgebiet der Vakuumhandhabungsvorrichtung realisiert werden, insbesondere da infolge einer aktiven Bewegung des Anlageelements eine vorteilhaft einfache Anpassung der Vakuumhandhabungsvorrichtung an unterschiedliche Produktformate von handzuhabenden Produkten realisierbar ist. Es kann vorteilhaft durch die aktive Bewegung des Anlageelements eine gegen eine durch ein Vakuum erzeugte Ansaugkraft wirkende Gegenkraft erzeugt werden, insbesondere um ein produktschonendes Hineinbewegen/Hineinsaugen von Produkten zu ermöglichen. Vorteilhaft kann mittels der erfindungsgemäßen Vakuumhandhabungsvorrichtung im Vergleich zum Stand der Technik einer durch die Ansaugkraft möglichen und ungewünschten Bewegung des Anlageelements in den Aufnahmeraum hinein, bevor das Produkt an dem Anlageelement anliegt, vorteilhaft entgegengewirkt werden.

Die Vakuumhandhabungsvorrichtung ist bevorzugt zu einem Handhaben von Produkten, insbesondere Lebensmitteln, wie beispielsweise Kekse, Schokotaler, Reiswaffeln o. dgl., vorgesehen. Unter "vorgesehen" soll insbesondere speziell eingerichtet, speziell ausgelegt, speziell ausgestattet und/oder speziell programmiert verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist die Vakuumhandhabungsvorrichtung zu einem Bilden von, insbesondere vertikal ausgerichteten, Stapeln, insbesondere so genannten Piles, oder, insbesondere horizontal ausgerichteten, Reihen, insbesondere so genannten Slugs, aus Produkten vorgesehen, die auf einem Transportelement, insbesondere einem Förderband o. dgl., einer Transportvorrichtung der die Vakuumhandhabungsvorrichtung umfassenden Verpackungsmaschine, insbesondere liegend, transportiert werden, insbesondere bevor die Produkte in den Aufnahmeraum der Aufnahmeeinheit der Vakuumhandhabungsvorrichtung gefördert, insbesondere eingesaugt, werden. Die Vakuumhandhabungsvorrichtung umfasst vorzugsweise eine Unterdruckquelle, die zu einem Erzeugen eines Luftstroms im bzw. durch den Aufnahmeraum der Aufnahmeeinheit vorgesehen ist, um Produkte in den Aufnahmeraum, insbesondere auf eine, einem Fachmann bereits bekannte Art und Weise, hinein fördern zu können, insbesondere hinein saugen zu können. Es ist auch denkbar, dass der Luftstrom zumindest zu einer Unterstützung eines Herausbewegens, insbesondere eines Herausblasens, von Produkten aus dem Aufnahmeraum nutzbar ist, insbesondere zusätzlich oder alternativ zum Anlageelement. Die Aufnahmeeinheit umfasst vorzugsweise zumindest einen hohlzylindrischen Grundkörper oder zumindest zwei relativ zueinander beweglich gelagerte, insbesondere jeweils eine halbkreis- oder sichelförmige Innenwand oder einen holzylindrischen Querschnitt aufweisende, Grundkörperteile, der oder die den Aufnahmeraum begrenzt oder begrenzen. Bei einer Ausgestaltung der Aufnahmeeinheit mit zwei beweglich gelagerten Grundkörperteilen, insbesondere Halbschalen, ist an einem der oder es sind an beiden der Grundkörperteile zumindest ein Dichtungselement/e, wie beispielsweise eine Dichtlippe o. dgl., der Aufnahmeeinheit angeordnet, insbesondere um eine zuverlässige Führung des Luftstroms im, insbesondere durch den, Aufnahmeraum, insbesondere zumindest von einer Aufnahmeöffnung des Aufnahmeraums zu einer Ansaugfluidaustrittsöffnung des Aufnahmeraums, zu ermöglichen. Das/die Dichtungselement/e ist/sind vorzugsweise an einer Seite zumindest eines der Grundkörperteile angeordnet, die dem anderen der Grundkörperteile zugewandt ist, wobei die Grundkörperteile über das/die Dichtungselement/e in einem geschlossenen Zustand der Grundkörperteile aneinander anliegen. Vorzugsweise ist an jedem der Grundkörperteile ein Dichtungselement der Aufnahmeeinheit angeordnet, die zu einer Abdichtung zusammenwirken. Bei einer Ausgestaltung der Grundkörperteile mit einer halbkreis- oder sichelförmigen Innenwand sind die Grundkörperteile vorzugsweise schwenkbar relativ zueinander beweglich gelagert. Eine Bewegungsachse der Grundkörperteile mit einer halbkreis- oder sichelförmigen Innenwand verläuft bevorzugt zumindest im Wesentlichen parallel zu einer Längsachse der Aufnahmeeinheit. Bei einer Ausgestaltung der Grundkörperteile mit einem holzylindrischen Querschnitt sind die Grundkörperteile vorzugsweise translatorisch relativ zueinander beweglich gelagert. Eine Bewegungsachse der Grundkörperteile mit einem holzylindrischen Querschnitt verläuft bevorzugt zumindest im Wesentlichen parallel zu einer Längsachse der Aufnahmeeinheit. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Das Anlageelement ist vorzugsweise translatorisch relativ zum Grundkörper oder relativ zu den Grundkörperteilen beweglich gelagert. Bevorzugt ist das Anlageelement translatorisch im Aufnahmeraum beweglich gelagert. Eine Bewegungsachse des Anlageelements verläuft vorzugsweise zumindest im Wesentlichen parallel zur Längsachse der Aufnahmeeinheit und/oder zur Bewegungsachse der Grundkörperteile. Es ist jedoch auch denkbar, dass das Anlageelement entlang und/oder um eine andere, einem Fachmann als sinnvoll erscheinende Bewegungsachse des Anlageelements verläuft, wie beispielsweise translatorisch entlang und/oder schwenkbar um eine zumindest im Wesentlichen senkrecht zur Längsachse der Aufnahmeeinheit und/oder zur Bewegungsachse der Grundkörperteile verlaufende Bewegungsachse des Anlageelements o. dgl. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Das Anlageelement ist bevorzugt mittels der Aktivantriebseinheit entlang und/oder um die Bewegungsachse des Anlageelements relativ zum Grundkörper oder relativ zu den Grundkörperteilen bewegbar. Die Aufnahmeeinheit, insbesondere der Grundkörper oder die Grundkörperteile zusammen mit dem Anlageelement, ist, insbesondere sind, vorzugsweise mittels einer Lagereinheit der Vakuumhandhabungsvorrichtung beweglich, insbesondere schwenkbar, gelagert. Eine Bewegungsachse der Aufnahmeeinheit verläuft bevorzugt quer, insbesondere zumindest im Wesentlichen senkrecht, zur Bewegungsachse des Anlageelements. Vorzugsweise umfasst die Vakuumhandhabungsvorrichtung zumindest eine Bewegungseinheit, insbesondere einen Deltaroboter o. dgl., an der die Aufnahmeeinheit mittels der Lagereinheit beweglich angeordnet ist.

Die Aktivantriebseinheit ist bevorzugt zu einer Umwandlung von einer Energieart in eine andere Energieart, insbesondere von elektrischer Energie in mechanische Energie, oder zu einer Umwandlung von in einem Energieträgermedium, insbesondere in einem Fluid, gespeicherter Energie in mechanische Arbeit vorgesehen, um eine Bewegung des Anlageelements hervorzurufen. Beispielsweise kann die Aktivantriebseinheit als Fluidantriebseinheit, insbesondere als Hydraulik- oder Pneumatikantriebseinheit, als Elektroantriebseinheit, insbesondere als Servoantriebseinheit, oder als eine andere, einem Fachmann als sinnvoll erscheinende Antriebseinheit ausgebildet sein. Die Vakuumhandhabungsvorrichtung umfasst vorzugsweise eine Steuer- oder Regeleinheit, die zu einer Steuerung oder Regelung der Aktivantriebseinheit vorgesehen ist. Die Steuer- oder Regeleinheit kann als mechanische Steuer- oder Regeleinheit und/oder als elektronische Steuer- oder Regeleinheit ausgebildet sein. Unter einer "elektronischen Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Vakuumhandhabungsvorrichtung kann eine Erfassungseinheit umfassen, die dazu vorgesehen ist, eine Position des Anlageelements und/oder von zumindest einem im Aufnahmeraum angeordneten Produkt der Vielzahl an Produkten zu erfassen, insbesondere um in Abhängigkeit von der erfassten Position das Anlageelement aktiv zu bewegen. Die Erfassungseinheit kann beispielsweise eine Lichtschranke, einen Entfernungsmesser, einen Taster, einen beweglichen Finger o. dgl., aufweisen, um eine Position des Anlageelements und/oder zumindest eines der Vielzahl an Produkten im Aufnahmeraum zu erfassen. Vorzugsweise ist die Erfassungseinheit mit der Steuer- oder Regeleinheit verbunden, um erfasste Daten oder Signale der Erfassungseinheit an die Steuer- oder Regeleinheit zu übertragen, in Abhängigkeit von denen die Aktivantriebseinheit von der Steuer- oder Regeleinheit steuerbar oder regelbar ist.

Des Weiteren wird vorgeschlagen, dass die Aktivantriebseinheit dazu vorgesehen ist, das Anlageelement in zumindest zwei, insbesondere entgegengesetzt gerichtete, Richtungen aktiv zu bewegen, insbesondere in eine einer Aufnahmeöffnung der Aufnahmeeinheit zugewandte Richtung und in eine der Aufnahmeöffnung abgewandte Richtung. Bevorzugt verlaufen die der Aufnahmeöffnung der Aufnahmeeinheit zugewandte Richtung und die der Aufnahmeöffnung abgewandte Richtung zumindest im Wesentlichen parallel zur Bewegungsachse des Anlageelements. Das Anlageelement kann schraubenartig oder linear entlang der der Aufnahmeöffnung der Aufnahmeeinheit zugewandten Richtung und/oder entlang der der Aufnahmeöffnung abgewandten Richtung bewegbar sein. Durch eine Bewegung des Anlageelements in die der der Aufnahmeöffnung zugewandte Richtung kann vorteilhaft ein aktives Ausschieben von Produkten aus dem Aufnahmeraum erfolgen. Es kann vorteilhaft eine zuverlässige und steuer- oder regelbare Bewegung des Anlageelements in eine gewünschte Position des Anlageelements relativ zum Aufnahmeraum ermöglicht werden. Es kann vorteilhaft eine produktschonende Handhabung realisiert werden, da insbesondere eine Aufprallenergie eines Produkts an dem Anlageelement bei einem Einsaugen des Produkts in den Aufnahmeraum gering gehalten werden kann. Es kann vorteilhaft durch die aktive Bewegung des Anlageelements eine gegen eine durch ein Vakuum erzeugte Ansaugkraft wirkende Gegenkraft erzeugt werden, insbesondere um ein produktschonendes Hineinbewegen/Hineinsaugen von Produkten zu ermöglichen. Vorteilhaft kann mittels der erfindungsgemäßen Vakuumhandhabungsvorrichtung im Vergleich zum Stand der Technik einer durch die Ansaugkraft möglichen und ungewünschten Bewegung des Anlageelements in den Aufnahmeraum hinein, bevor das Produkt an dem Anlageelement anliegt, vorteilhaft entgegengewirkt werden.

Ferner wird vorgeschlagen, dass die Aktivantriebseinheit zumindest ein Getriebeelement, insbesondere eine Gewindestange oder eine Zahnstange, umfasst, das an dem Anlageelement angeordnet ist, und zu einer Bewegung des Anlageelements mit einem Antriebselement, insbesondere einem Ritzel, der Aktivantriebseinheit zusammenwirkt. Das Anlageelement kann einteilig mit dem Getriebeelement ausgebildet sein oder mittels einer form- und/oder kraftschlüssigen Verbindung lösbar mit dem Getriebeelement verbunden sein. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das Antriebselement ist vorzugsweise drehfest mit einer Antriebswelle eines Antriebs, insbesondere eines Servomotors, der Aktivantriebseinheit verbunden. Insbesondere ist das Antriebselement rotatorisch antreibbar. Vorzugsweise ist mittels einer Rotationsbewegung des Antriebselements zumindest eine translatorische Bewegung des Getriebeelements und des damit verbundenen Anlageelements relativ zum Grundkörper oder zu den Grundkörperteilen hervorrufbar. Durch die erfindungsgemäße Ausgestaltung der Vakuumhandhabungsvorrichtung kann vorteilhaft konstruktiv einfach eine sichere und präzise Bewegung des Anlageelements realisiert werden. Es kann vorteilhaft eine zuverlässige und steuer- oder regelbare Bewegung des Anlageelements in eine gewünschte Position des Anlageelements relativ zum Aufnahmeraum ermöglicht werden. Das Anlageelement kann vorteilhaft aktiv an eine Abmessung, insbesondere an eine Stärke/Dicke, des Produkts angepasst werden, insbesondere durch eine entsprechende aktive Bewegung des Anlageelements relativ zum Aufnahmeraum in Abhängigkeit von der Stärke/Dicke des Produkts. Es kann vorteilhaft eine hohe Flexibilität in Bezug auf ein Einsatzgebiet der Vakuumhandhabungsvorrichtung realisiert werden, insbesondere da infolge einer aktiven Bewegung des Anlageelements eine vorteilhaft einfache Anpassung der Vakuumhandhabungsvorrichtung an unterschiedliche Produktformate von handzuhabenden Produkten realisierbar ist.

Zudem wird vorgeschlagen, dass die Aktivantriebseinheit an einer einer, insbesondere der bereits zuvor genannten, Aufnahmeöffnung der Aufnahmeeinheit abgewandten Seite des Aufnahmeraums und/oder an einer sich zumindest im Wesentlichen parallel zu einer, insbesondere der bereits zuvor genannten, Bewegungsachse des Anlageelements verlaufenden Seite der Aufnahmeeinheit an der Aufnahmeeinheit angeordnet ist. Die Aktivantriebseinheit kann vorzugsweise teilweise oder vollständig an einer Oberseite der Aufnahmeeinheit angeordnet sein, die an der der Aufnahmeöffnung abgewandten Seite der Aufnahmeeinheit angeordnet ist, und/oder an einer teilweise oder vollständig sich quer, insbesondere zumindest im Wesentlichen senkrecht, zur Oberseite erstreckenden Seitenwand der Aufnahmeeinheit angeordnet sein. Es sind jedoch auch andere, einem Fachmann als sinnvoll erscheinende Anordnungen der Aktivantriebseinheit an der Aufnahmeeinheit oder relativ zur Aufnahmeeinheit denkbar, wie beispielsweise eine zumindest teilweise Anordnung der Aktivantriebseinheit innerhalb der Aufnahmeeinheit. Durch die erfindungsgemäße Ausgestaltung der Vakuumhandhabungsvorrichtung kann vorteilhaft eine kompakte und sichere Anordnung der Aktivantriebseinheit erreicht werden. Es kann vorteilhaft bei einer dennoch kompakten Ausgestaltung eine zuverlässige und steuer- oder regelbare Bewegung des Anlageelements in eine gewünschte Position des Anlageelements relativ zum Aufnahmeraum ermöglicht werden.

Es wird weiter vorgeschlagen, dass die Vakuumhandhabungsvorrichtung zumindest eine, insbesondere die bereits zuvor genannte, Erfassungseinheit zu einer Erfassung einer Position von zumindest einem Produkt der Vielzahl an Produkten im Aufnahmeraum umfasst, insbesondere wobei die Aktivantriebseinheit dazu vorgesehen ist, das Anlageelement in Abhängigkeit von einer mittels der Erfassungseinheit erfassten Position des zumindest einen Produkts im Aufnahmeraum aktiv zu bewegen. Es ist denkbar, dass die Vakuumhandhabungsvorrichtung zur Lösung der oben genannten Aufgabe in einer alternativen Ausgestaltung unabhängig von der Aktivantriebseinheit ausgebildet ist. Vorzugsweise umfasst die Vakuumhandhabungsvorrichtung in der alternativen Ausgestaltung, insbesondere in der unabhängig von der Aktivantriebseinheit ausgebildeten Ausgestaltung, die zumindest eine Aufnahmeeinheit zu einer Aufnahme von einer Vielzahl an Produkten, insbesondere Lebensmitteln, die zumindest den Aufnahmeraum begrenzt, in dem die Vielzahl an Produkten geordnet, insbesondere in Form eines Stapels oder einer Reihe, anordenbar sind, und die zumindest das beweglich gelagerte Anlageelement umfasst, an dem zumindest ein, insbesondere ein zuerst in den Aufnahmeraum gefördertes, Produkt der Vielzahl an Produkten in einem im Aufnahmeraum angeordneten Zustand des zumindest einen Produkts anlegbar ist, insbesondere anliegt, und die zumindest eine Erfassungseinheit zu einer Erfassung einer Position von zumindest einem Produkt der Vielzahl an Produkten im Aufnahmeraum. Die Erfassungseinheit kann beispielsweise eine Lichtschranke, einen Entfernungsmesser, einen Taster, einen beweglichen Finger o. dgl., aufweisen, um eine Position zumindest eines der Vielzahl an Produkten und/oder des Anlageelements im Aufnahmeraum zu erfassen. Durch die erfindungsgemäße Ausgestaltung der Vakuumhandhabungsvorrichtung kann vorteilhaft eine indirekte Zählfunktion einer Anzahl von im Aufnahmeraum angeordneten Produkten realisiert werden. Es kann vorteilhaft eine zuverlässige und steuer- oder regelbare Bewegung des Anlageelements in eine gewünschte Position des Anlageelements relativ zum Aufnahmeraum ermöglicht werden.

Ferner geht die Erfindung aus von einem Verfahren zu einem Handhaben von Produkten, insbesondere Lebensmitteln, vorzugsweise zu einem Bilden von Stapeln oder Reihen aus Produkten, mittels einer Vakuumhandhabungsvorrichtung, insbesondere mittels einer erfindungsgemäßen Vakuumhandhabungsvorrichtung. Es wird vorgeschlagen, dass in zumindest einem Verfahrensschritt des Verfahrens ein, insbesondere das bereits zuvor genannte, Anlageelement einer, insbesondere der bereits zuvor genannten, Aufnahmeeinheit der Vakuumhandhabungsvorrichtung aktiv mittels einer, insbesondere der bereits zuvor genannten, Aktivantriebseinheit der Vakuumhandhabungsvorrichtung bewegt wird. Durch die erfindungsgemäße Ausgestaltung kann vorteilhaft eine zuverlässige und steuer- oder regelbare Bewegung des Anlageelements in eine gewünschte Position des Anlageelements relativ zum Aufnahmeraum ermöglicht werden. Es kann vorteilhaft eine produktschonende Handhabung realisiert werden, da insbesondere eine Aufprallenergie eines Produkts an dem Anlageelement bei einem Einsaugen des Produkts in den Aufnahmeraum gering gehalten werden kann. Das Anlageelement kann vorteilhaft aktiv an eine Abmessung, insbesondere an eine Stärke/Dicke, des Produkts angepasst werden, insbesondere durch eine entsprechende aktive Bewegung des Anlageelements relativ zum Aufnahmeraum in Abhängigkeit von der Stärke/Dicke des Produkts. Es kann vorteilhaft eine hohe Flexibilität in Bezug auf ein Einsatzgebiet des Verfahrens realisiert werden, insbesondere da eine einfache Anpassung an verschiedene Produktformate von handzuhabenden Produkten realisierbar ist. Es kann durch die aktive Bewegung des Anlageelements eine gegen eine durch ein Vakuum erzeugte Ansaugkraft wirkende Gegenkraft erzeugt werden, insbesondere um ein produktschonendes Hineinbewegen/Hineinsaugen von Produkten zu ermöglichen. Vorteilhaft kann mittels des erfindungsgemäßen Verfahrens im Vergleich zum Stand der Technik einer durch die Ansaugkraft mögliche und ungewünschte Bewegung des Anlageelements in den Aufnahmeraum hinein, bevor das Produkt an dem Anlageelement anliegt, vorteilhaft entgegengewirkt werden.

Zudem wird vorgeschlagen, dass in zumindest einem Verfahrensschritt des Verfahrens das Anlageelement aktiv in eine einer, insbesondere der bereits zuvor genannten, Aufnahmeöffnung der Aufnahmeeinheit abgewandte, insbesondere in die bereits zuvor genannte, Richtung bewegt wird. Durch die erfindungsgemäße Ausgestaltung kann vorteilhaft ein produktschonendes Befüllen des Aufnahmeraums realisiert werden. Es kann vorteilhaft erreicht werden kann, dass das Anlageelement zusammen, vorzugsweise synchron, mit einem aktuell in den Aufnahmeraum hineinbewegten Produkt relativ zum Aufnahmeraum bewegt wird. Es kann vorteilhaft eine zuverlässige und steuer- oder regelbare Bewegung des Anlageelements in eine gewünschte Position des Anlageelements relativ zum Aufnahmeraum ermöglicht werden. Es kann vorteilhaft eine produktschonende Handhabung realisiert werden, da insbesondere eine Aufprallenergie eines Produkts an dem Anlageelement bei einem Einsaugen des Produkts in den Aufnahmeraum gering gehalten werden kann.

Des Weiteren wird vorgeschlagen, dass in zumindest einem Verfahrensschritt des Verfahrens das Anlageelement aktiv in eine einer, insbesondere der bereits zuvor genannten, Aufnahmeöffnung der Aufnahmeeinheit zugewandte, insbesondere die bereits zuvor genannte, Richtung bewegt wird. Durch eine Bewegung des Anlageelements in die der der Aufnahmeöffnung zugewandte Richtung kann vorteilhaft ein aktives Ausschieben von Produkten aus dem Aufnahmeraum erfolgen, insbesondere bei einer Ablage eines vertikal ausgerichteten Stapels, insbesondere einem so genannten Pile, aus Produkten mittels der Vakuumhandhabungsvorrichtung. Es kann vorteilhaft eine produktschonende Handhabung realisiert werden. Es kann vorteilhaft eine hohe Flexibilität in Bezug auf ein Einsatzgebiet realisiert werden, insbesondere da sowohl zuverlässig Stapel oder Reihen aus Produkten gebildet werden können, um eine qualitative hochwertige Verpackung von Produkten zu ermöglichen.

Ferner wird vorgeschlagen, dass in zumindest einem Verfahrensschritt des Verfahrens eine Position von zumindest einem Produkt einer Vielzahl an Produkten in einem, insbesondere in dem bereits zuvor genannten, Aufnahmeraum einer, insbesondere der, Aufnahmeeinheit der Vakuumhandhabungsvorrichtung mittels einer, insbesondere der bereits zuvor genannten, Erfassungseinheit der Vakuumhandhabungsvorrichtung erfasst wird, insbesondere wobei das Anlageelement in Abhängigkeit von einer mittels der Erfassungseinheit erfassten Position des zumindest einen Produkts im Aufnahmeraum aktiv mittels einer, insbesondere der, Aktivantriebseinheit der Vakuumhandhabungsvorrichtung bewegt wird. Es ist denkbar, dass das Verfahren zur Lösung der oben genannten Aufgabe in einer alternativen Ausgestaltung unabhängig von einer aktiven Bewegung des Anlageelements ausgebildet ist. Durch die erfindungsgemäße Ausgestaltung kann vorteilhaft eine indirekte Zählfunktion einer Anzahl von im Aufnahmeraum angeordneten Produkten realisiert werden. Es kann vorteilhaft eine zuverlässige und steuer- oder regelbare Bewegung des Anlageelements in eine gewünschte Position des Anlageelements relativ zum Aufnahmeraum ermöglicht werden.

Des Weiteren wird eine Verpackungsmaschine zu einer Verpackung von Produkten, insbesondere Lebensmitteln, mit zumindest einer erfindungsgemäßen Vakuumhandhabungsvorrichtung vorgeschlagen. Die Verpackungsmaschine kann weitere, einem Fachmann als sinnvoll erscheinende Vorrichtungen und/oder Einheiten umfassen, die zu einer Herstellung und/oder zu einer Verpackung von Produkten, insbesondere von Lebensmitteln, nutzbar sind. Die Verpackungsmaschine ist vorzugsweise zumindest zu einer Verpackung und/oder Umverpackung von Lebensmitteln vorgesehen. Die Verpackungsmaschine kann zusätzlich zur Vakuumhandhabungsvorrichtung eine Vielzahl an weiteren Vorrichtungen und/oder Einheiten aufweisen, die ein Fachmann für sinnvoll erachtet, wie beispielsweise eine Transportvorrichtung, eine Sterilisationsvorrichtung, eine Produktzuführvorrichtung, eine Befüllvorrichtung, eine Verschlussvorrichtung, eine Umverpackungsvorrichtung o. dgl. Durch die erfindungsgemäße Ausgestaltung kann vorteilhaft eine zuverlässige und steuer- oder regelbare Bewegung des Anlageelements in eine gewünschte Position des Anlageelements relativ zum Aufnahmeraum ermöglicht werden. Es kann vorteilhaft eine produktschonende Handhabung realisiert werden, da insbesondere eine Aufprallenergie eines Produkts an dem Anlageelement bei einem Einsaugen des Produkts in den Aufnahmeraum gering gehalten werden kann. Das Anlageelement kann vorteilhaft aktiv an eine Abmessung, insbesondere an eine Stärke/Dicke, des Produkts angepasst werden, insbesondere durch eine entsprechende aktive Bewegung des Anlageelements relativ zum Aufnahmeraum in Abhängigkeit von der Stärke/Dicke des Produkts. Es kann vorteilhaft eine hohe Flexibilität in Bezug auf ein Einsatzgebiet der Verpackungsmaschine realisiert werden, insbesondere da infolge einer aktiven Bewegung des Anlageelements eine vorteilhaft einfache Anpassung der Vakuumhandhabungsvorrichtung an unterschiedliche Produktformate von handzuhabenden Produkten realisierbar ist. Es kann durch die aktive Bewegung des Anlageelements eine gegen eine durch ein Vakuum erzeugte Ansaugkraft wirkende Gegenkraft erzeugt werden, insbesondere um ein produktschonendes Hineinbewegen/Hineinsaugen von Produkten zu ermöglichen.

Die erfindungsgemäße Vakuumhandhabungsvorrichtung, das erfindungsgemäße Verfahren und/oder die erfindungsgemäße Verpackungsmaschine sollen/soll hierbei nicht auf die oben beschriebene Anwendung und Ausführungsform beschränkt sein. Insbesondere können/kann die erfindungsgemäße Vakuumhandhabungsvorrichtung, das erfindungsgemäße Verfahren und/oder die erfindungsgemäße Verpackungsmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Einen Teil einer erfindungsgemäßen Verpackungsmaschine mit zumindest einer erfindungsgemäßen Vakuumhandhabungsvorrichtung in einer schematischen Darstellung,
- Fig. 2: eine Schnittansicht einer erfindungsgemäßen Vakuumhandhabungsvorrichtung mit translatorisch beweglichen Grundkörperteilen in einer schematischen Darstellung,
- Fig. 3: eine Draufsicht auf eine erfindungsgemäße Vakuumhandhabungsvorrichtung mit schwenkbar beweglichen Grundkörperteilen in einer schematischen Darstellung,
- Fig. 4: eine Detailansicht einer erfindungsgemäßen Vakuumhandhabungsvorrichtung aus Figur 2 oder 3 während einer Ablage von Produkten als Stapel in einer Verpackung in einer schematischen Darstellung und
- Fig. 5: ein Ablaufdiagramm eines erfindungsgemäßen Verfahrens zu einem Handhaben von Produkten mittels einer erfindungsgemäßen Vakuumhandhabungsvorrichtung in einer schematischen Darstellung.

### Beschreibung der Ausführungsbeispiele

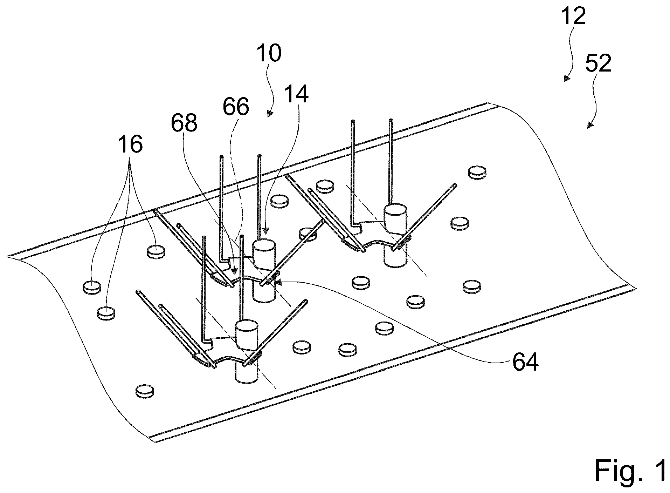

Figur 1 zeigt eine Verpackungsmaschine 12 zu einer Verpackung von Produkten 16, insbesondere Lebensmitteln, mit zumindest einer Vakuumhandhabungsvorrichtung 10. Die Vakuumhandhabungsvorrichtung 10 ist vorzugsweise als Vakuum-Picker ausgebildet. Bevorzugt umfasst die Verpackungsmaschine 12 eine Vielzahl an Vakuumhandhabungsvorrichtungen 10. Die Verpackungsmaschine 12 ist vorzugsweise als eine Lebensmittelverpackungsmaschine ausgebildet. Es ist jedoch auch denkbar, dass die Verpackungsmaschine 12 eine andere, einem Fachmann als sinnvoll erscheinende Ausgestaltung aufweist, wie beispielsweise eine Ausgestaltung als Medikamentenverpackungsmaschine, als Stückgutverpackungsmaschine o. dgl. Die Verpackungsmaschine 12 kann zusätzlich zur Vakuumhandhabungsvorrichtung 10 weitere, einem Fachmann als sinnvoll erscheinende Vorrichtungen und/oder Einheiten aufweisen, die zu einer Herstellung und/oder zu einer Verpackung von Produkten 16, insbesondere Lebensmitteln, Verwendung finden, wie beispielsweise eine Transportvorrichtung 52, eine Sterilisationsvorrichtung, eine Produktzuführvorrichtung, eine Befüllvorrichtung, eine Verschlussvorrichtung, eine Umverpackungsvorrichtung o. dgl. Bevorzugt umfasst die Verpackungsmaschine 12, insbesondere zusätzlich zur Vakuumhandhabungsvorrichtung 10, zumindest die Transportvorrichtung 52 zu einem Transport von, insbesondere ungeordneten, Produkten 16. Die Transportvorrichtung 52 ist vorzugsweise als Förderbandvorrichtung ausgebildet, die zumindest ein Förderband zu einem Transport der Produkte 16 umfasst. Es ist jedoch auch denkbar, dass die Transportvorrichtung 52 eine andere, einem Fachmann als sinnvoll erscheinenden Ausgestaltung aufweist, wie beispielsweise eine Ausgestaltung als elektrodynamische Linear- oder Planarfördervorrichtung, als Kettenförderervorrichtung o. dgl.

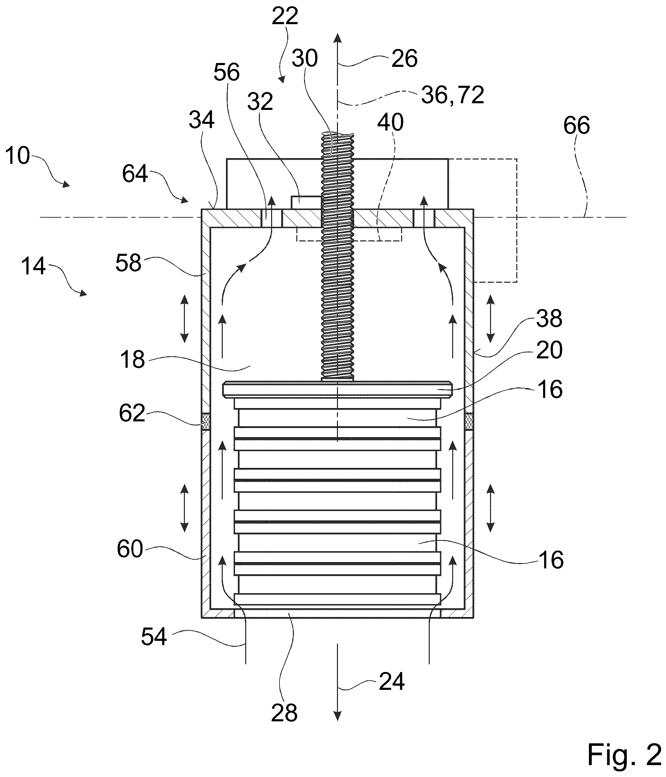

Die Vakuumhandhabungsvorrichtung 10 ist bevorzugt zu einem Handhaben von Produkten 16, insbesondere Lebensmitteln, wie beispielsweise Kekse, Schokotaler, Reiswaffeln o. dgl., vorgesehen. Vorzugsweise ist die Vakuumhandhabungsvorrichtung 10 zu einem Bilden von, insbesondere vertikal ausgerichteten, Stapeln, insbesondere so genannten Piles, oder, insbesondere horizontal ausgerichteten, Reihen, insbesondere so genannten Slugs, aus Produkten 16 vorgesehen, die auf einem Transportelement, insbesondere einem Förderband o. dgl., der Transportvorrichtung 52, insbesondere liegend, transportiert werden, insbesondere bevor die Produkte 16 in einen Aufnahmeraum 18 einer Aufnahmeeinheit 14 der Vakuumhandhabungsvorrichtung 10 gefördert, insbesondere eingesaugt, werden. Die Vakuumhandhabungsvorrichtung 10 umfasst vorzugsweise eine Unterdruckquelle (hier nicht näher dargestellt), die zu einem Erzeugen eines Luftstroms 54 (vgl. Figur 2) im bzw. durch den Aufnahmeraum 18 der Aufnahmeeinheit 14 vorgesehen ist, um Produkte 16 in den Aufnahmeraum 18, insbesondere auf eine, einem Fachmann bereits bekannte Art und Weise, hinein fördern zu können, insbesondere hinein saugen zu können. Die Unterdruckquelle ist vorzugsweise mittels Unterdruckleitung (hier nicht näher dargestellt), insbesondere auf eine, einem Fachmann bereits bekannte Art und Weise, fluidtechnisch mit dem Aufnahmeraum 18 verbunden, insbesondere mit Ansaugfluidaustrittsöffnungen 56 (vgl. Figur 2) der Aufnahmeeinheit 14.

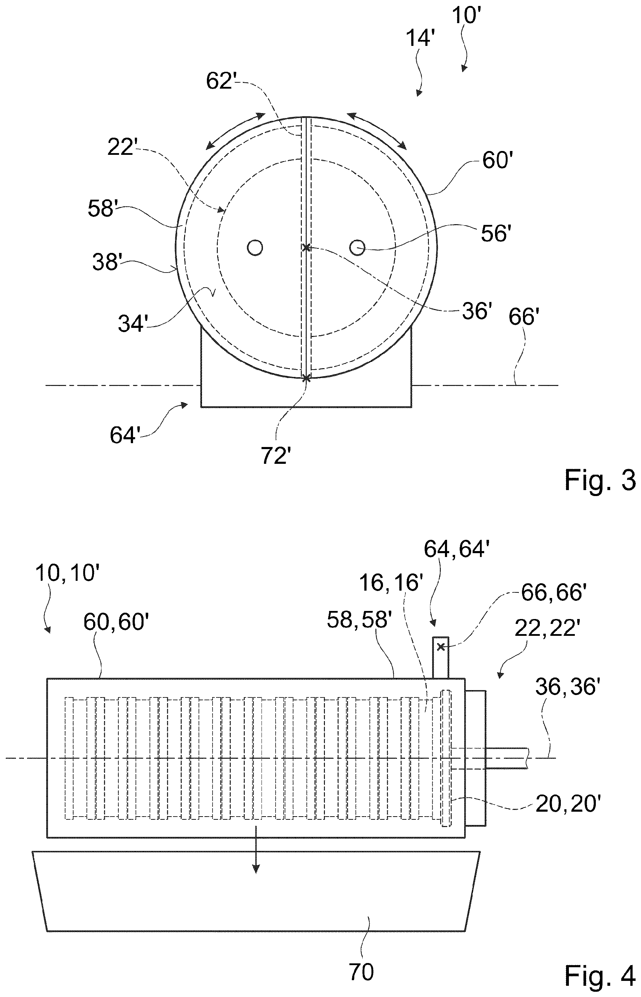

Die Vakuumhandhabungsvorrichtung 10 umfasst zumindest die Aufnahmeeinheit 14 zu einer Aufnahme von einer Vielzahl an Produkten 16, insbesondere Lebensmitteln, die zumindest den Aufnahmeraum 18 begrenzt, in dem die Vielzahl an Produkten 16 geordnet, insbesondere in Form eines Stapels oder einer Reihe, anordenbar sind, und die zumindest ein beweglich gelagertes Anlageelement 20 umfasst, an dem zumindest ein, insbesondere ein zuerst in den Aufnahmeraum 18 gefördertes, Produkt 16 der Vielzahl an Produkten 16 in einem im Aufnahmeraum 18 angeordneten Zustand des zumindest einen Produkts 16 anlegbar ist, insbesondere anliegt (vgl. auch Figuren 2 und 4). Die Aufnahmeeinheit 14 umfasst vorzugsweise zumindest zwei relativ zueinander beweglich gelagerte, insbesondere jeweils einen holzylindrischen Querschnitt aufweisende, Grundkörperteile 58, 60, die den Aufnahmeraum 18 begrenzen. Vorzugsweise ist an zumindest einem der oder es sind an beiden der Grundkörperteile 58, 60 zumindest ein Dichtungselement/e 62, wie beispielsweise eine Dichtlippe o. dgl., der Aufnahmeeinheit 14 angeordnet, insbesondere um eine zuverlässige Führung des Luftstroms 54 im, insbesondere durch den, Aufnahmeraum 18, insbesondere zumindest von einer Aufnahmeöffnung 28 des Aufnahmeraums 18 zu der/den Ansaugfluidaustrittsöffnung/en 56 des Aufnahmeraums 18, zu ermöglichen. Das/die Dichtungselement/e 62 ist/sind vorzugsweise an einer Seite zumindest eines der Grundkörperteile 58, 60 angeordnet, die dem anderen der Grundkörperteile 58, 60 zugewandt ist, wobei die Grundkörperteile 58, 60 über das/die Dichtungselement/e 62 in einem geschlossenen Zustand der Grundkörperteile 58, 60 aneinander anliegen. Vorzugsweise ist an jedem der Grundkörperteile 58, 60 ein Dichtungselement 62 der Aufnahmeeinheit 14 angeordnet, die zu einer Abdichtung zusammenwirken. Die Grundkörperteile 58, 60 sind vorzugsweise translatorisch relativ zueinander beweglich gelagert. Eine Bewegungsachse 72 der Grundkörperteile 58, 60 verläuft bevorzugt zumindest im Wesentlichen parallel zu einer Längsachse der Aufnahmeeinheit 14.

Das Anlageelement 20 ist vorzugsweise translatorisch relativ zu den Grundkörperteilen 58, 60 beweglich gelagert. Bevorzugt ist das Anlageelement 20 translatorisch im Aufnahmeraum 18 beweglich gelagert. Eine Bewegungsachse 36 des Anlageelements 20 verläuft vorzugsweise zumindest im Wesentlichen parallel zur Längsachse der Aufnahmeeinheit 14 und/oder zur Bewegungsachse 72 der Grundkörperteile 58, 60. Es ist jedoch auch denkbar, dass das Anlageelement 20 entlang und/oder um eine andere, einem Fachmann als sinnvoll erscheinende Bewegungsachse 36 des Anlageelements 20 beweglich gelagert ist, wie beispielsweise translatorisch entlang und/oder schwenkbar um eine sich zumindest im Wesentlichen senkrecht zur Längsachse der Aufnahmeeinheit 14 und/oder zur Bewegungsachse 72 der Grundkörperteile 58, 60 verlaufenden Bewegungsachse 36 des Anlageelements 20 o. dgl. Das Anlageelement 20 ist bevorzugt mittels einer Aktivantriebseinheit 22 der Vakuumhandhabungsvorrichtung 10 entlang und/oder um die Bewegungsachse 36 des Anlageelements 20 relativ zu den Grundkörperteilen 58, 60 bewegbar. Die Aufnahmeeinheit 14, insbesondere die Grundkörperteile 58, 60 zusammen mit dem Anlageelement 20, ist, insbesondere sind, vorzugsweise mittels einer Lagereinheit 64 der Vakuumhandhabungsvorrichtung 10 beweglich, insbesondere schwenkbar, gelagert (vgl. Figuren 1 bis 4). Eine Bewegungsachse 66 der Aufnahmeeinheit 14 verläuft bevorzugt quer, insbesondere zumindest im Wesentlichen senkrecht, zur Bewegungsachse 36 des Anlageelements 20 (vgl. Figuren 2 bis 4). Vorzugsweise umfasst die Vakuumhandhabungsvorrichtung 10 zumindest eine Bewegungseinheit 68, insbesondere einen Deltaroboter o. dgl., an der die Aufnahmeeinheit 14 mittels der Lagereinheit 64 beweglich angeordnet ist (vgl. Figur 1).

Die Aktivantriebseinheit 22 ist zu einer aktiven, insbesondere frei von einer rein durch eine Gewichts- und/oder Federkraft hervorrufbaren Bewegung des Anlageelements 20 ausgebildeten, Bewegung des Anlageelements 20 vorgesehen. Die Aktivantriebseinheit 22 ist bevorzugt als Servoantriebseinheit ausgebildet. Die Vakuumhandhabungsvorrichtung 10 umfasst vorzugsweise eine Steuer- oder Regeleinheit (hier nicht näher dargestellt), die zu einer Steuerung oder Regelung der Aktivantriebseinheit 22 vorgesehen ist. Die Aktivantriebseinheit 22 ist bevorzugt dazu vorgesehen, das Anlageelement 20 in zumindest zwei, insbesondere entgegengesetzt gerichtete, Richtungen 24, 26 aktiv zu bewegen, insbesondere in eine der Aufnahmeöffnung 28 der Aufnahmeeinheit 14 zugewandte Richtung 24 und in eine der Aufnahmeöffnung 28 abgewandte Richtung 26. Bevorzugt verlaufen die der Aufnahmeöffnung 28 der Aufnahmeeinheit 14 zugewandte Richtung 24 und die der Aufnahmeöffnung 28 abgewandte Richtung 26 zumindest im Wesentlichen parallel zur Bewegungsachse 36 des Anlageelements 20. Das Anlageelement 20 kann schraubenartig oder linear entlang der der Aufnahmeöffnung 28 der Aufnahmeeinheit 14 zugewandten Richtung 24 und/oder entlang der der Aufnahmeöffnung 28 abgewandten Richtung 26 bewegbar sein.

Vorzugsweise umfasst die Aktivantriebseinheit 22 zumindest ein Getriebeelement 30, insbesondere eine Gewindestange oder eine Zahnstange, das an dem Anlageelement 20 angeordnet ist, und zu einer Bewegung des Anlageelements 20 mit einem Antriebselement 32, insbesondere einem Ritzel, der Aktivantriebseinheit 22 zusammenwirkt (vgl. Figur 2). Das Anlageelement 20 kann einteilig mit dem Getriebeelement 30 ausgebildet sein oder mittels einer form- und/oder kraftschlüssigen Verbindung lösbar mit dem Getriebeelement 30 verbunden sein. Das Antriebselement 32 ist vorzugsweise drehfest mit einer Antriebswelle (hier nicht näher dargestellt) eines Antriebs, insbesondere eines Servomotors, der Aktivantriebseinheit 22 verbunden. Insbesondere ist das Antriebselement 32 rotatorisch antreibbar. Vorzugsweise ist mittels einer Rotationsbewegung des Antriebselements 32 zumindest eine translatorische Bewegung des Getriebeelements 30 und des damit verbundenen Anlageelements 20 relativ zu den Grundkörperteilen 58, 60 hervorrufbar.

Bevorzugt ist die Aktivantriebseinheit 22 an einer der Aufnahmeöffnung 28 der Aufnahmeeinheit 14 abgewandten Seite 34 des Aufnahmeraums 18 (vgl. Figur 2) und/oder an einer sich zumindest im Wesentlichen parallel zur Bewegungsachse 36 des Anlageelements 20 verlaufenden Seite 38 der Aufnahmeeinheit 14 an der Aufnahmeeinheit 14 angeordnet (in Figur 2 lediglich gestrichelt angedeutet). Die Aktivantriebseinheit 22 kann vorzugsweise teilweise oder vollständig an einer Oberseite der Aufnahmeeinheit 14 angeordnet sein, die an der der Aufnahmeöffnung 28 abgewandten Seite 34 der Aufnahmeeinheit 14 angeordnet ist, und/oder an einer teilweise oder vollständig sich quer, insbesondere zumindest im Wesentlichen senkrecht zur Oberseite, erstreckenden Seitenwand der Aufnahmeeinheit 14 angeordnet sein. Es sind jedoch auch andere, einem Fachmann als sinnvoll erscheinende Anordnungen der Aktivantriebseinheit 22 an der Aufnahmeeinheit 14 oder relativ zur Aufnahmeeinheit 14 denkbar, wie beispielsweise eine zumindest teilweise Anordnung der Aktivantriebseinheit 22 innerhalb der Aufnahmeeinheit 14.

Die Vakuumhandhabungsvorrichtung 10 umfasst vorzugsweise zumindest eine Erfassungseinheit 40 (in Figur 2 lediglich gestrichelt angedeutet) zu einer Erfassung einer Position von zumindest einem Produkt 16 der Vielzahl an Produkten 16 im Aufnahmeraum 18, insbesondere wobei die Aktivantriebseinheit 22 dazu vorgesehen ist, das Anlageelement 20 in Abhängigkeit von einer mittels der Erfassungseinheit 40 erfassten Position des zumindest einen Produkts 16 im Aufnahmeraum 18 aktiv zu bewegen. Die Erfassungseinheit 40 kann alternativ oder zusätzlich zu einer Erfassung einer Position des Anlageelements 20 im Aufnahmeraum 18 vorgesehen sein, insbesondere um in Abhängigkeit von der erfassten Position das Anlageelement 20 aktiv zu bewegen. Die Erfassungseinheit 40, kann beispielsweise eine Lichtschranke, einen Entfernungsmesser, einen Taster, einen beweglichen Finger o. dgl., aufweisen, um eine Position des Anlageelements 20 und/oder zumindest eines der Vielzahl an Produkten 16 im Aufnahmeraum 18 zu erfassen. Vorzugsweise ist die Erfassungseinheit 40 mit der Steuer- oder Regeleinheit verbunden, um erfasste Daten oder Signale der Erfassungseinheit 40 an die Steuer- oder Regeleinheit zu übertragen, in Abhängigkeit von denen die Aktivantriebseinheit 22 von der Steuer- oder Regeleinheit steuerbar oder regelbar ist.

In Figur 3 ist ein Ausführungsbeispiel der Erfindung gezeigt, das anstatt einer translatorisch beweglichen Lagerung von Grundkörperteilen 58, 60 eine schwenkbare Lagerung von Grundkörperteilen 58', 60' aufweist. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 und 2, verwiesen werden kann. Zur Unterscheidung der Ausführungsbeispiele ist den Bezugszeichen des Ausführungsbeispiels in der Figur 3 ein Apostroph nachgestellt. Alternativ oder zusätzlich umfasst die Aufnahmeeinheit 14' in dem in der Figur 3 dargestellten Ausführungsbeispiel vorzugsweise zumindest zwei relativ zueinander beweglich gelagerte, jeweils eine halbkreis- oder sichelförmige Innenwand bildende Grundkörperteile 58', 60'. Die Grundkörperteile 58', 60' sind vorzugsweise schwenkbar relativ zueinander beweglich gelagert. Eine Bewegungsachse 72' der Grundkörperteile 58', 60' verläuft bevorzugt zumindest im Wesentlichen parallel zu einer Längsachse der Aufnahmeeinheit 14.

Figur 4 zeigt die Vakuumhandhabungsvorrichtung 10, 10' aus Figur 2 oder 3 während einer Ablage von Produkten 16 als Stapel in einer Verpackung 70. Bevorzugt sind die Grundkörperteile 58, 60, 58', 60' relativ zueinander beweglich, um eine Ablage von Produkten 16 als Stapel in einer Verpackung 70 zu ermöglichen. Bei der Vakuumhandhabungsvorrichtung 10 aus Figur 2 sind die Grundkörperteile 58, 60 translatorisch auseinanderbewegbar, um die Produkte 16 freizugeben und diese in die Verpackung 70 zu entladen. Bei der Vakuumhandhabungsvorrichtung 10' aus Figur 3 sind die Grundkörperteile 58', 60' schwenkbar auseinanderbewegbar, um die Produkte 16 freizugeben und diese in die Verpackung 70 zu entladen.

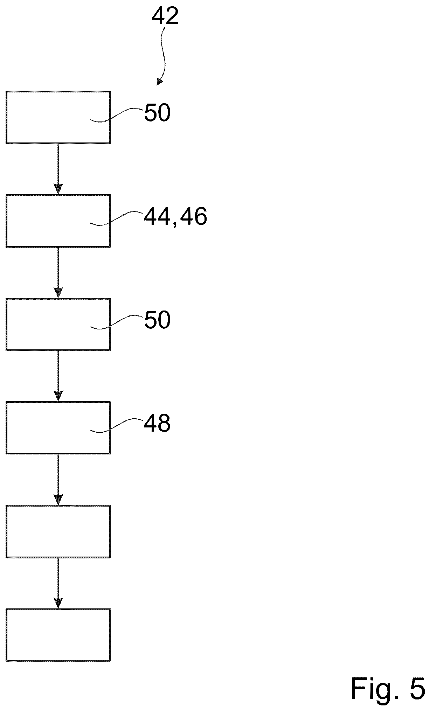

Figur 5 zeigt einen schematischen Ablauf eines Verfahrens 42 zu einem Handhaben von Produkten 16, insbesondere Lebensmitteln, vorzugsweise zu einem Bilden von Stapeln oder Reihen aus Produkten 16, mittels einer Vakuumhandhabungsvorrichtung 10, 10'. Bevorzugt wird in zumindest einem Verfahrensschritt 44 des Verfahrens 42 das Anlageelement 20 der Aufnahmeeinheit 14, 14' der Vakuumhandhabungsvorrichtung 10, 10' aktiv mittels der Aktivantriebseinheit 22, 22' der Vakuumhandhabungsvorrichtung 10, 10' bewegt. Vorzugsweise wird in zumindest einem Verfahrensschritt 46 des Verfahrens 42 das Anlageelement 20 aktiv in die der Aufnahmeöffnung 28 der Aufnahmeeinheit 14, 14' abgewandte Richtung 26 bewegt. Bevorzugt wird in zumindest einem Verfahrensschritt 48 des Verfahrens 42 das Anlageelement 20 aktiv in die der Aufnahmeöffnung 28 der Aufnahmeeinheit 14 zugewandte Richtung 24 bewegt. Vorzugsweise wird in zumindest einem Verfahrensschritt 50 des Verfahrens 42 eine Position von zumindest einem Produkt 16 einer Vielzahl an Produkten 16 in dem Aufnahmeraum 18 der Aufnahmeeinheit 14, 14' mittels der Erfassungseinheit 40 erfasst, insbesondere wobei das Anlageelement 20 in Abhängigkeit von einer mittels der Erfassungseinheit 40 erfassten Position des zumindest einen Produkts 16 im Aufnahmeraum 18 aktiv mittels der Aktivantriebseinheit 22 bewegt wird. Das Verfahren 42 zu einem Handhaben von Produkten 16, insbesondere Lebensmitteln, vorzugsweise zu einem Bilden von Stapeln oder Reihen aus Produkten 16 kann weitere, einem Fachmann als sinnvoll erscheinende Verfahrensschritte aufweisen. Zudem sollen auch mögliche Verfahrensschritte, die sich aus der Beschreibung der Figuren 1 bis 4 ableiten lassen, für das Verfahren 42 als offenbart gelten.

## Patentansprüche

1. Vakuumhandhabungsvorrichtung, insbesondere Vakuum-Picker, für eine Verpackungsmaschine, mit zumindest einer Aufnahmeeinheit (14) zu einer Aufnahme von einer Vielzahl an Produkten (16), insbesondere Lebensmitteln, die zumindest einen Aufnahmeraum (18) begrenzt, in dem die Vielzahl an Produkten (16) geordnet, insbesondere in Form eines Stapels oder einer Reihe, anordenbar sind, und die zumindest ein beweglich gelagertes Anlageelement (20) umfasst, an dem zumindest ein, insbesondere ein zuerst in den Aufnahmeraum (18) gefördertes, Produkt (16) der Vielzahl an Produkten (16) in einem im Aufnahmeraum (18) angeordneten Zustand des zumindest einen Produkts (16) anlegbar ist, insbesondere anliegt, **gekennzeichnet durch** zumindest eine Aktivantriebseinheit (22) zu einer aktiven, insbesondere frei von einer rein durch eine Gewichts- und/oder Federkraft hervorrufbaren Bewegung des Anlageelements (20) ausgebildeten, Bewegung des Anlageelements (20).

2. Vakuumhandhabungsvorrichtung nach Anspruch 1, **dadurch gekennzeichnet, dass** die Aktivantriebseinheit (22) dazu vorgesehen ist, das Anlageelement (20) in zumindest zwei, insbesondere entgegengesetzt gerichtete, Richtungen (24, 26) aktiv zu bewegen, insbesondere in eine einer Aufnahmeöffnung (28) der Aufnahmeeinheit (14) zugewandte Richtung (24) und in eine der Aufnahmeöffnung (28) abgewandte Richtung (26).

3. Vakuumhandhabungsvorrichtung nach Anspruch 1 oder 2, **dadurch gekennzeichnet, dass** die Aktivantriebseinheit (22) zumindest ein Getriebeelement (30), insbesondere eine Gewindestange oder eine Zahnstange, umfasst, das an dem Anlageelement (20) angeordnet ist, und zu einer Bewegung des Anlageelements (20) mit einem Antriebselement (32), insbesondere einem Ritzel, der Aktivantriebseinheit (22) zusammenwirkt.

4. Vakuumhandhabungsvorrichtung nach einem der vorhergehenden Ansprüche, **dadurch gekennzeichnet, dass** die Aktivantriebseinheit (22) an einer einer Aufnahmeöffnung (28) der Aufnahmeeinheit (14) abgewandten Seite (34) des Aufnahmeraums (18) und/oder an einer sich zumindest im Wesentlichen parallel zu einer Bewegungsachse (36) des Anlageelements (20) verlaufenden Seite (38) der Aufnahmeeinheit (14) an der Aufnahmeeinheit (14) angeordnet ist.

5. Vakuumhandhabungsvorrichtung zumindest nach dem Oberbegriff des Anspruchs 1, insbesondere nach einem der vorhergehenden Ansprüche, **gekennzeichnet durch** zumindest eine Erfassungseinheit (40) zu einer Erfassung einer Position von zumindest einem Produkt (16) der Vielzahl an Produkten (16) im Aufnahmeraum (18), insbesondere wobei die Aktivantriebseinheit (22) dazu vorgesehen ist, das Anlageelement (20) in Abhängigkeit von einer mittels der Erfassungseinheit (40) erfassten Position des zumindest einen Produkts (16) im Aufnahmeraum (18) aktiv zu bewegen.

6. Verfahren zu einem Handhaben von Produkten (16), insbesondere Lebensmitteln, vorzugsweise zu einem Bilden von Stapeln oder Reihen aus Produkten (16), mittels einer Vakuumhandhabungsvorrichtung, insbesondere mittels einer Vakuumhandhabungsvorrichtung nach einem der vorhergehenden Ansprüche, **dadurch gekennzeichnet, dass** in zumindest einem Verfahrensschritt (44) ein Anlageelement (20) einer Aufnahmeeinheit (14) der Vakuumhandhabungsvorrichtung aktiv mittels einer Aktivantriebseinheit (22) der Vakuumhandhabungsvorrichtung bewegt wird.

7. Verfahren nach Anspruch 6, **dadurch gekennzeichnet, dass** in zumindest einem Verfahrensschritt (46) das Anlageelement (20) aktiv in eine einer Aufnahmeöffnung (28) der Aufnahmeeinheit (14) abgewandte Richtung (26) bewegt wird.

8. Verfahren nach Anspruch 6 oder 7, **dadurch gekennzeichnet, dass** in zumindest einem Verfahrensschritt (48) das Anlageelement (20) aktiv in eine einer Aufnahmeöffnung (28) der Aufnahmeeinheit (14) zugewandte Richtung (24) bewegt wird.

9. Verfahren zumindest nach dem Oberbegriff des Anspruchs 6, insbesondere nach einem der Ansprüche 6 bis 8, **dadurch gekennzeichnet, dass** in zumindest einem Verfahrensschritt (50) eine Position von zumindest einem Produkt (16) einer Vielzahl an Produkten (16) in einem Aufnahmeraum (18) einer, insbesondere der, Aufnahmeeinheit (14) der Vakuumhandhabungsvorrichtung mittels einer Erfassungseinheit (40) der Vakuumhandhabungsvorrichtung erfasst wird, insbesondere wobei das Anlageelement (20) in Abhängigkeit von einer mittels der Erfassungseinheit (40) erfassten Position des zumindest einen Produkts (16) im Aufnahmeraum (18) aktiv mittels einer, insbesondere der, Aktivantriebseinheit (22) der Vakuumhandhabungsvorrichtung bewegt wird.

10. Verpackungsmaschine zu einer Verpackung von Produkten (16), insbesondere Lebensmitteln, mit zumindest einer Vakuumhandhabungsvorrichtung nach einem der Ansprüche 1 bis 5.
